Europäisches Patentamt

(19) European Patent Office

Office européen des brevets

(11) Veröffentlichungsnummer: **0 040 406**
**B2**

(12) **NEUE EUROPÄISCHE PATENTSCHRIFT**

(45) Veröffentlichungstag der neuen Patentschrift:
27.12.89

(51) Int. Cl.⁴: **B 30 B 11/00**

(21) Anmeldenummer: **81103714.2**

(22) Anmeldetag: **14.05.81**

(54) **Verfahren zum Steuern einer Futterwürfelpressanlage und Würfelpressanlage zum Ausüben dieses Verfahrens.**

(30) Priorität: **19.05.80 CH 3875/80**

(43) Veröffentlichungstag der Anmeldung:
**25.11.81 Patentblatt 81/47**

(45) Bekanntmachung des Hinweises auf die Patenterteilung:
**11.01.84 Patentblatt 84/2**

(45) Bekanntmachung des Hinweises auf die Entscheidung
über den Einspruch:
**27.12.89 Patentblatt 89/52**

(84) Benannte Vertragsstaaten:
**CH DE FR GB IT LI NL SE**

(56) Entgegenhaltungen:
**CH-A-600 792**
**DE-A-2 204 049**
**DE-A-2 208 946**
**DE-B-1 204 005**
**DE-C-140 393**
**FR-A-1 264 556**
**FR-A-2 252 917**
**FR-A-2 341 429**
**GB-A-1 399 381**
**US-A-2 388 491**
**US-A-3 467 031**

**Pratique de la compression et techniques nouvelles
p. 180-181 Edition Louis David
Firmenschrift Amandus Kahl Nachrichten 6/1978,
"Zusatz grosser Flüssigkeitsmengen (Fette) zum
Mischfutter von der Pelletierung
Artikel "Bestimmung der Abriebkennzahl zur**

(73) Patentinhaber: **Gebrüder Bühler AG, CH- 9240 Uzwil
(CH)**

(72) Erfinder: **Wetzel, Willi, Sonnenbühl 1, CH- 9240
Uzwil (CH)**
Erfinder: **Schaffner, Hanspeter, Armetsholzstrasse
2, CH- 9244 Niederuzwil (CH)**

(74) Vertreter: **Dipl.- Phys.Dr. Manitz Dipl.- Ing., Dipl.-
W.- Ing. Finsterwald Dipl.- Ing. Grämkow Dipl.-
Chem.Dr. Heyn Dipl.- Phys. Rotermund, Morgan,
B.Sc.(Phys.) Robert- Koch- Strasse 1, D-8000
München 22 (DE)**

(56) Entgegenhaltungen: (Fortsetzung)
**Charakterisierung der Pelletfestigkeit", Mühlen-
und Mischfutter Jahrbuch 1978/79, S. 162-169, Verlag
Moritz Schäfer, Detmold**

EP 0 040 406 B2

## Beschreibung

### Verfahren zum Steuern einer Futterwürfelpreßanlage und Würfelpreßanlage zum Ausüben dieses Verfahrens

Die Erfindung betrifft ein Verfahren zum Steuern einer Futterwürfelpreßanlage und eine Futterwürfelpreßanlage, welche eine Futterwürfelpresse mit einer Preßbohrung aufweisenden Preßform enthält, mit welcher drehbare Preßrollen zum Auspressen des auf die Preßform eingegebenen Produktes radial nach außen durch die Preßbohrungen zusammenwirken, wobei die ausgepreßten Stränge in Würfel genannte Stücke zerkleinert und die Würfel durch einen Kühler geführt werden. Die Preßform ist vorzugsweise ringförmig und zu einer Drehbewegung antreibbar. Ein solches Verfahren ist aus der CH-A-600 792 bekannt.

Ein seit Jahrzehnten angewandtes Verfahren dieser Art zielt bereits darauf ab, die zulässige Leistung des Antriebsmotors der Futterwürfelpresse möglichst voll auszunutzen. Hierzu wird die Produktzufuhr in der Anfangsphase schrittweise erhöht. Gleichzeitig wird die Dampfzufuhr überproportional erhöht, was eine zunehmende Temperatur des zu verpressenden Produktes bewirkt. Beim Erreichen der vollen Leistung des Antriebsmotors erhöht man noch zunächst die Dampfzufuhr und damit die Temperatur des zu verpressenden Produktes, was einerseits für die Qualität, insbesondere die Festigkeit der Würfel meistens günstig ist (Vermehrung der Haftreaktion im Produkt, z. B. durch Bildung von Flüssigkeitsbrücken) und die Preßbarkeit verbessert (Erhöhung der Elastizität), so daß die aufgenommene Antriebsleistung fällt. Sie wird wieder bis zum Maximum erhöht durch Erhöhen der Produktzufuhr.

Dieser Vorgang wird mehrmals wiederholt, bis zu einer Temperatur, deren Erhöhung keine beträchtliche Verminderung der Antriebsleistung bewirkt, was die Gefahr eines Festfahrens der Presse bringt. Diese Verschlechterung der Preßbarkeit ist wahrscheinlich durch Hochtemperaturreaktionen, wie Gelatinisierung von Stärke, Verkleben von Proteinen, Karamelisierung von Zucker usw. verursacht.

Dieses seit langem übliche Verfahren gewährleistet eine hohe Produktion, ohne aber ein Optimum an Wirtschaftlichkeit zu garantieren. Ist nämlich die Qualität der Würfel, auch Pellets genannt, ungenügend (unter Qualität wird in erster Linie ihre Festigkeit und Freiheit von feinen Teilen bzw. Abrieb verstanden), so treten Verluste auf, weil die Tiere meistens das den Abrieb darstellende Mehl nicht fressen oder weil bei zu geringer Festigkeit der Würfel Schwierigkeiten bei den automatischen Fütterungssystemen entstehen, was die Brauchbarkeit überhaupt in Frage stellt. Dieses Verfahren ist im Buch "Pratique de la Compression" von David, Louis und Lefumeux, Jean veröffentlicht 1972 im Absatz C auf Seiten 180/181, erörtert.

Bis heute erfolgt die Qualitätsbestimmung immer nach beendetem Kühlprozeß mit Hilfe von Bestimmungsgeräten, die entweder die Härte der Würfel oder dessen Abriebfestigkeit messen. Die Bestimmung der Qualität ist aufwendig und bringt Zeit- und Personalaufwand, Umtriebe usw. Die ermittelten Resultate können in den wenigsten Fällen dazu genutzt werden, um den Pelletierprozeß bzw. das Pressen so zu steuern, daß direkt Verbesserungen an der Würfelqualität resultieren.

Das Resultat bezüglich Würfelqualität kennt man, wenn überhaupt, erst 30 bis 60 Minuten nach dem Verpressen, oder sogar später.

Bei einem Verfahren zum Erzeugen von formbeständigen, verfütterungsbereiten Preßlingen in einer über das zu verarbeitende Erntegut hinwegfahrende Aufsammelpresse für landwirtschaftliche Futterstoffe, wie Heu oder ähnliches faseriges Erntegut, ist es bereits bekannt, die Futterstoffe vor dem Preßvorgang mit einer Befeuchtungsanlage zu berieseln (DE-B-1 204 005). Die Menge des zu versprühenden Wassers sowie seine Regulierung durch entsprechende Ventile steht im Ermessen der Bedienungsperson, die durch praktische Erfahrung den Feuchtigkeitsgrad der zu einem Förderer bewegten Preßlinge beurteilen kann.

Die Feuchtigkeit ist jedoch kein für die Qualität der Futterwürfel charakteristischer Parameter, denn je nach dem verarbeiteten Rohmaterial kann die geforderte, in erster Linie durch die Festigkeit und Freiheit von feinen Teilen bzw. Abrieb bestimmte Würfelqualität bei ganz unterschiedlichen Feuchtigkeitsgehalten erzielt werden.

Das Ziel der vorliegenden Erfindung besteht nun darin, eine Futterwürfelpreßanlage vollautomatisch so zu steuern, daß sie schnell auf Qualitätsschwankungen reagiert und so eine gleichmäßigere Produktqualität gewährleistet.

Zur Lösung dieser Aufgabe sieht die Erfindung vor, daß einer oder mehrere der folgenden Parameter der Würfelqualität:

der Anteil der Feinteile im verpreßten Produkt,

die Festigkeit der Würfel,
die Schwingung einer Unterlage, insbesondere eines Bleches, auf das die Würfel fallen,
die Schneidkraft der Messer für die aus der Preßform austretenden Stränge,
das Verhältnis von entstandenem Mehl und noch vorhandenen Würfeln nach pneumatischer Umherwirbelung einiger Würfel in einem Abtriebskreislauf,
das Verhältnis der über ein bestimmtes Maß über die Oberfläche der Preßform vorstehenden Stränge zu der maximal möglichen Anzahl solcher Stränge zwischen der Futterwürfelpresse und dem Kühler laufend überwacht und gemessen und zur Steuerung der Futterwürfelpresse verwendet werden, indem die von einem oder mehreren der vorgenannten Parameter bestimmte Würfelqualität bei Unterschreiten eines vorgegebenen Standards automatisch wieder auf den Sollwert gebracht wird.

Erfindungsgemäß wird also keine in großen Zeitabständen erfolgende, mehr oder weniger verläßliche Beurteilung des Feuchtigkeitsgrades vorgenommen, sondern es erfolgt eine laufende, unmittelbare Messung, d.h. exakte Bestimmung der Würfelqualität direkt nach der Presse noch vor dem Kühlen der feuchten und teilweise noch plastischen Würfel. Die Qualitätsbestimmung wird also an dem noch gar nicht in seinem Endzustand befindlichen Produkt vorgenommen, wodurch die durch das erfindungsgemäße Verfahren geschaffene Regelstrecke innerhalb von einigen Sekunden bis einigen Minuten auf Qualitätsschwankungen reagiert.

Besonders vorteilhaft ist es, wenn der gemessene Parameter zur Steuerung einer oder mehrer der folgenden Größen verwendet wird:

des Durchsatzes des zu verpressenden Produktes,
der Konditioniertemperatur,
der Feuchtigkeit,
der Produktverweilzeit in den Preßlöchern der Preßform,
des Spaltes zwischen der Preßform und den Preßrollen,
des Verhältnisses des Anteils der Fettzugabe zum Produkt vor und nach der Futterwürfelpresse.

Besondere Bedeutung kommt dabei der Konditioniertemperatur bei. Es kommt also darauf an, daß die Temperatur zur Erzielung einer möglichst guten Qualität optimiert wird. Das heißt, daß die Qualitätsregelung auch schon während der Betriebsphase stattfinden soll. Es kann aber auch vorkommen, daß die optimale Temperatur wegen des Festfahrens der Presse nicht optimal, sondern maximal ist. Dies bedeutet eine gewisse Einschränkung bezüglich der Temperaturwahl. Auch die energetische Seite muß in diesem Zusammenhang betrachtet werden. Eine zu hohe Temperatur könnte die Energiekosten zu stark steigern, so daß hier eine weitere Eingrenzung für die tatsächlich zu wählende Konditioniertemperatur gegeben ist. Im allgemeinen erfolgt die günstigste Einstellung der Konditioniertemperatur durch Regelung des bzw. der Dampfventile.

Sofern der gemessene Parameter zur Steuerung des Durchsatzes des zu verpressenden Produktes verwendet wird, soll bei Werten des Parameters, die ein Unterschreiten der Sollqualität bedeuten, der Durchsatz durch die Futterwürfelpresse vermindert werden.

Dient als Parameter der Anteil der Feinteile im verpreßten Produkt, so ist es zweckmäßig, wenn der Anteil der Feinteile durch Auswiegen gemessen wird. Auch kann der Anteil der Feinteile durch Zugabe von feinem eingefärbten Eisenpulver zum zu verpressenden Produkt und durch Messen der Menge der magnetisch abgeschiedenen Partikel des Eisenpulvers bestimmt werden. Mit besonderem Vorteil wird die Menge der magnetisch abgeschiedenen Feinteile optisch gemessen. Ein derartiges eingefärbtes Eisenpulver wird schon für Versuche an Mischern verwendet und beeinträchtigt die Eigenschaften der Würfel nicht; im Gegenteil können die Eigenschaften der Würfel hierdurch sogar verbessert werden.

Sofern als Parameter die Festigkeit der Würfel dient, kann die Festigkeit durch Bruchbeanspruchung der Würfel und Messen des Anteils der resultierenden Feinteile festgestellt werden.

Weiter ist es vorteilhaft, wenn die Würfel vor dem Messen der Qualität tiefgekühlt werden. Hierdurch wird nämlich eine schnelle Erhöhung der Festigkeit erreicht, die dann bereits eine Aussage über die Würfelqualität zuläßt, die bereits weitgehend der endgültigen Qualität nach dem Kühlen entspricht.

Die erfindungsgemäße Futterwürfelpreßanlage zum Ausüben des beschriebenen Verfahrens kennzeichnet sich dadurch, daß gleich nach dem Auslauf der Futterwürfelpresse vor dem Kühler eine Meßvorrichtung für die Würfelqualität vorhanden ist und daß die Meßvorrichtung an ein Pressensteuerungsgerät angeschlossen ist.

Vorzugsweise soll die Meßvorrichtung über das Pressensteuerungsgerät mit dem Antrieb der Speisevorrichtung der Presse zur Beeinflussung dieses Antriebes verbunden sein.

Eine erste praktische Verwirklichung der erfindungsgemäßen Futterwürfelpreßanlage kennzeichnet sich dadurch, daß die Meßvorrichtung ein Sieb mit einem Einlauf für das gepreßte Produkt, einem Auslauf für die Würfel und einem Auslauf für die durch das Sieb durchgehenden Feinteile aufweist und daß am Auslauf für die Feinteile eine Durchsatzvorrichtung angeordnet ist, die an das Pressensteuerungsgerät angeschlossen ist, wobei vorzugsweise beim Zuführen des gesamten gepreßten Produktes zum Sieb das Pressensteuerungsgerät eine Rechenschaltung aufweist für den Prozentsatz des Meßwertes der Durchsatzmeßvorrichtung im Verhältnis zum Meßwert des an der Speisevorrichtung der Futterwürfelpresse gemessenen ganzen Durchsatzes der Presse, wobei diese Rechenschaltung auf den Antrieb der Speisevorrichtung wirkt.

Durch die vorgenannte Rechenschaltung kann der apparative Aufwand besonders gering gehalten werden.

Bei einer anderen vorteilhaften Ausführungsform der Erfindung ist vorgesehen, daß die Meßvorrichtung einen Magneten aufweist, vor welchem ein nicht-magnetisches Absetzband an einer Öffnung des Kanals für das gepreßte Produkt und an eine optische Auswertevorrichtung für die Bandbelegung geführt ist, wobei der Antrieb des Absetzbandes intermittierend erfolgen kann und wobei die Auswertevorrichtung mit der Pressensteuerung verbunden ist.

Eine andere Ausführungsform kennzeichnet sich dadurch, daß die Meßvorrichtung eine fest gelagerte Walze und eine gegen diese durch die Kraft einer Feder angepreßte beweglich gelagerte Walze aufweist, wobei ein Wegmesser für den Weg der beweglich gelagerten Walze weg von der fest gelagerten Walze beim Vermahlen eines Würfels vorgesehen und der Wegmesser mit dem Pressensteuerungsgerät verbunden ist.

Schließlich kann bei einer weiteren Verwirklichung des Erfindungsgedankens vorgesehen sein, daß die Meßvorrichtung eine Schleuderscheibe und eine Prallwand sowie eine Durchsatzmeßvorrichtung für den Teilfluß des verpreßten Produktes aufweist, der auf die Schleuderscheibe aufgegeben wird, daß ein nach der Prallwand angeordnetes Sieb mit einem Auslauf für die Würfel und einem Auslauf für die durch das Sieb durchgehenden feinen Teile versehen ist, wobei am Auslauf für die feinen Teile eine Durchsatzmeßvorrichtung angeordnet ist, und daß die beiden Durchsatzmeßvorrichtungen an einer Rechenschaltung des Pressensteuerungsgerätes für den Prozentsatz der feinen Teile verbunden ist, wobei diese Rechenschaltung auf den Antrieb der Speisevorrichtung der Futterwürfelpresse wirkt.

Bei dieser Ausführungsform ist der apparative Aufwand etwas größer als bei der vorher angegebenen Meßvorrichtung, jedoch ist die Genauigkeit höher, was bei bestimmten Anwendungsfällen erwünscht sein kann.

Eine besonders einfache Verwirklichung des Erfindungsgedankens ergibt sich dadurch, daß eine Fallstrecke für vereinzelte Würfel vorhanden ist, an deren Ende sich ein Auffangblech befindet, dessen Schwingungen gemessen und an das Pressensteuerungsgerät gegeben werden. Zur Schwingungsmessung eignet sich beispielsweise ein Vibrationsaufnehmer, wie er in der US-A-4 212 398 beschrieben ist.

Die erfindungsgemäß ebenfalls mögliche Regelung des Spaltes zwischen der Preßform und den Preßrollen kann gegebenenfalls gemäß der US-A-2 240 660 oder CH-A-431 250 erfolgen.

Schließlich kann eine weitere Ausführungsform so ausgebildet sein, daß ein Messer zum Abschneiden der aus den Preßbohrungen der Preßform austretenden Stränge mit einer Kraftmeßvorrichtung versehen ist, die mit dem Pressensteuerungsgerät verbunden ist.

Eine besonders bevorzugte Verwirklichung der Erfindung kennzeichnet sich dadurch, daß die Meßvorrichtung in kurzen Zeitabständen von z. B. 2 min einen kleinen Anteil ausgepreßter Würfel aufnimmt, kühlt und in einem pneumatischen Abriebkreislauf umherwirbelt und daß nach einigen Umläufen das Verhältnis von entstandenem Mehl und noch vorhandenen Würfeln gemessen und als elektrisches Signal dem Pressensteuerungsgerät zugeführt wird.

Eine andere, mit besonders geringem apparativem Aufwand verbundene Ausführungsform ist dadurch gekennzeichnet, daß die Meßvorrichtung an einer Stelle der Preßform, wo die Stränge im wesentlichen horizontal austreten bei abgestellten Messern die Anzahl der über ein bestimmtes Maß (z. B. 2 mm) noch vorstehenden, nicht abgebrochenen Stränge mißt und mit der maximal möglichen Anzahl solcher Stränge vergleicht, und das Ergebnis dieses Vergleiches als elektrisches Signal an das Pressensteuerungsgerät abgibt.

Sofern erfindungsgemäß das Verhältnis der Fettzugabe vor und nach dem Pressen gesteuert wird, ist zu berücksichtigen, daß, wenn das zu verpressende Produkt zu viel Fett enthält, das Strangpressen schwierig ist. Aus diesem Grunde wird erfindungsgemäß z. B. vorgesehen, daß 0,5 % des Fettes vor dem Pressen und 2 % nach dem Pressen aufgebracht werden. Aufgrund der erfindungsgemäßen Steuerung kann vor dem Pressen die größtmögliche Fettzugabe erfolgen, ohne daß die Würfelqualität beeinträchtigt wird. Die Zugabe des Fettes vor dem Pressen ist besonders bevorzugt, weil das später durch Sprühen aufgebrachte Fett durch Abrieb stärker gefährdet ist als das im Innern des Produktes befindliche Fett.

Sofern die Temperatur durch das Pressensteuerungsgerät auf einen Maximalwert reguliert wird, soll mit Vorteil der gemessene Parameter der Qualität zur Steuerung des Durchsatzes des zu verpressenden Produktes verwendet werden. Eine Verminderung des Durchsatzes bringt eine entsprechende Verminderung der Geschwindigkeit des Stranges in den Preßbohrungen der Preßform mit sich, was zu einer Erhöhung der Verweilzeit führt und auch die Festigkeit erhöht.

Normalerweise soll bei Werten des Parameters, die ein Unterschreiten der Sollqualität bedeuten, die in die Presse eingespeiste Produktmenge herabgesetzt werden.

Weiter ist zu berücksichtigen, daß die Qualität des Produktes auch nicht höher als gefordert werden soll, denn jede Erhöhung der Qualität über den Sollwert würde zu einer unnötigen Herabsetzung der Produktionsgeschwindigkeit und somit der Wirtschaftlichkeit führen. Anstatt die eingespeiste Produktmenge herabzusetzen, kann die Qualität in gewissen Fällen durch eine Herabsetzung der Temperatur erreicht werden. Eine weitere Beeinflussungsmöglichkeit der Qualität besteht in der Veränderung der Formumfangsgeschwindigkeit, wobei normalerweise eine Herabsetzung dieser Geschwindigkeit zur Erzielung einer geringeren Zentrifugalkraft angestrebt wird.

Die Erfindung wird im folgenden beispielsweise anhand der Zeichnung beschrieben; in dieser zeigt

Fig. 1 eine schematische Blockdarstellung einer automatisch geregelten Futterwürfelpreßanlage gemäß der Erfindung,

Fig. 2 eine schematische axiale Schnittansicht der bei der erfindungsgemäßen Futterwürfelpreßanlage verwendeten Futterwürfelpresse mit einer speziellen Meßvorrichtung für einen Parameter der Würfelqualität und die

Fig. 3 - 9 sieben weitere Ausführungsformen der bei der erfindungsgemäßen Futterwürfelpreßanlage verwendeten Meßvorrichtung für einen Parameter der Würfelqualität.

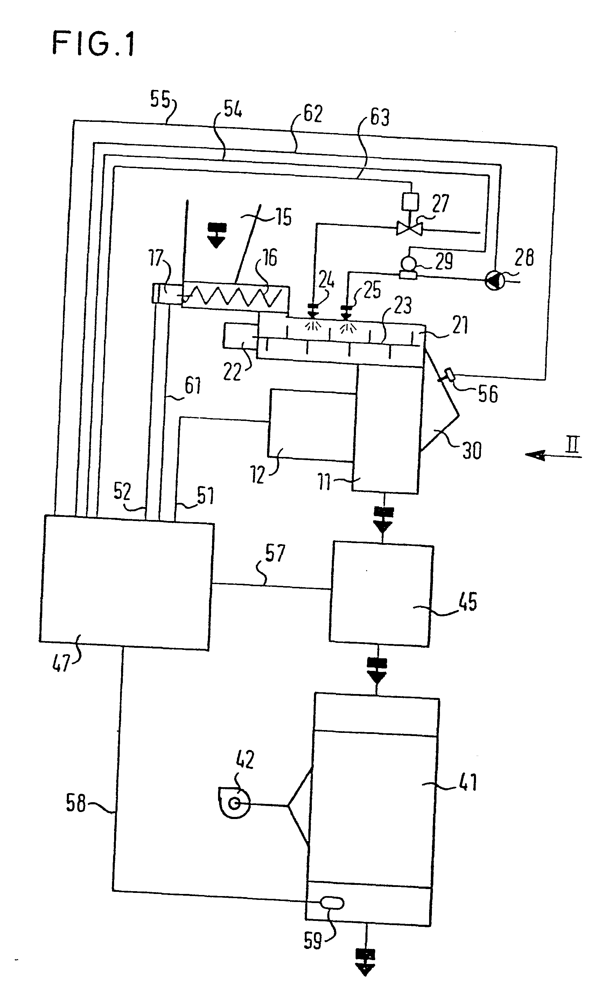

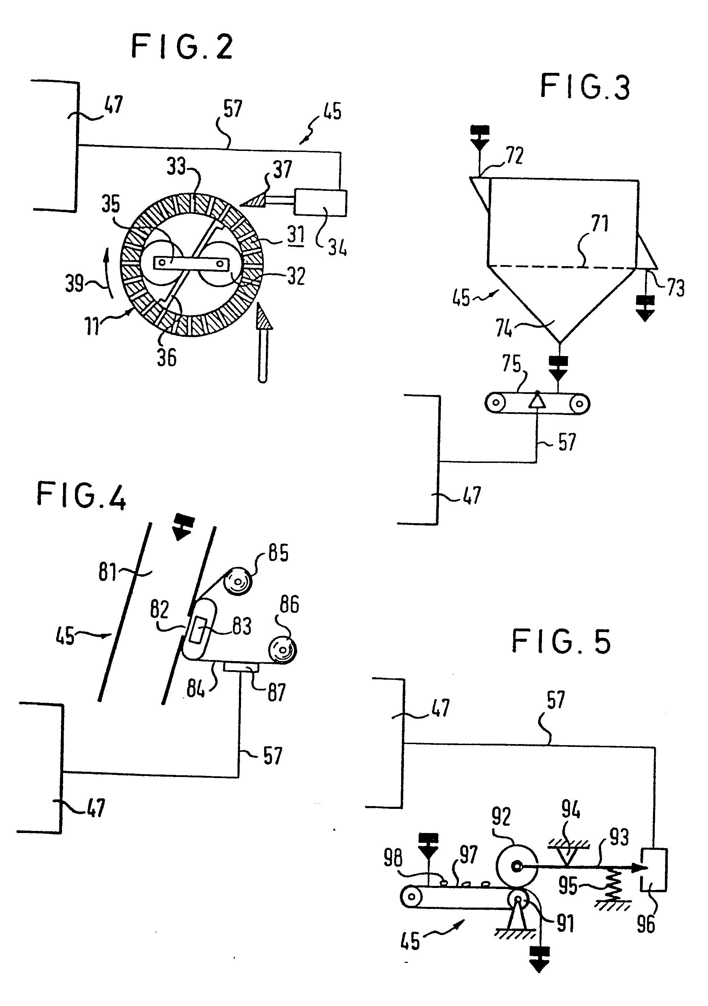

Nach Fig. 1 wird eine Futterwürfelpresse 11 durch einen Antriebsmotor 12 angetrieben. Ein unter einem Aufgabetrichter 15 angeordneter Schneckenförderer 16 ist durch einen Motor 17 angetrieben und speist das in den Aufgabetrichter 15 eingegebene Produkt in einen mit der Futterwürfelpresse 11 zusammengebauten Konditioneur 21. Dieser weist eine durch einen Motor 22 angetriebene Mischerwelle 23 auf und wird auch durch eine Dampfdüse 24 und eine Melassedüse 25 beschickt. Die Melassedüse 25 wird durch eine mengenregulierbare Pumpe 28 über einen Zähler 29 gespeist. Vom Konditioneur 21 führt ein Einlaufkasten 30 zu der vom Motor 12 abgewandten Stirnseite der Futterwürfelpresse 11, welche in Fig. 2 in Richtung des Pfeiles II der Fig. 1 im Schnitt dargestellt ist. Danach weist die Presse 11 eine ringförmige, vom Motor 12 angetriebene drehende Preßform mit Preßbohrungen 33 auf. Preßrollen 32 sind drehbar auf einer feststehenden Brücke 35 im Innern der Preßform 31 angebracht, auf welcher auch noch Speiseflügel 36 befestigt sind. Messer 37 sind am nicht dargestellten Gehäuse der Futterwürfelpresse 11 befestigt. Die Drehrichtung der Preßform 31 ist durch den Pfeil 39 angegeben. Die am Umfang der Preßform 31 durch die Messer 37 abgeschnittenen Würfel (es handelt sich hierbei nicht um Würfel im mathematischen Sinn, sondern um vom Strang abgeschnittene Stücke) fallen entweder direkt in einen in Fig. 1 schematisch gezeigten Schachtkühler 41, durch welchen ein Sauggebläse 42 Kühlluft zur Kühlung der infolge der Dampfbehandlung des Produktes im Konditioneur 21 und infolge des Strangpressens durch die Preßbohrungen 33 erhitzten Würfel hindurchzieht oder durch eine Meßvorrichtung 45 für mindestens einen Parameter der Würfelqualität hindurch. Ob die gesamte Menge der Würfel oder nur ein Teil davon durch die Meßvorrichtung strömt, hängt vom verwendeten Meßprinzip ab.

In ein vorzugsweise mit einem Rechner ausgerüstetes Pressensteuerungsgerät 47 sind folgende Meßleitungen eingeführt:

eine Meßleitung 51, die die Leistung des Antriebsmotors 11 der Presse 12 meldet;

eine Meßleitung 52, die die Drehzahl des Motors 17 und somit den durch die Speisevorrichtung 16 in den Konditioneur 21 zugeführten Durchsatz des zu verpressenden Produktes, z. B. Futtermehls, bestehend aus einer Anzahl gemischter Komponenten meldet;

eine Meßleitung 54, die den durch den Zähler 29 gemessenen Durchsatz der Melasse meldet, die durch die Pumpe 28 gefördert und durch die Melassedüse 25 in den Konditioneur 21 zugeführt wird;

eine Meßleitung 55, die durch einen Thermometer gemessene Temperatur des aus dem Konditioneur 21 kommenden gemischten Produktes, bevor es zur Preßform 31 gelangt, meldet;

eine Meßleitung 57, die den in der Meßvorrichtung 45 gemessenen Wert des Parameters der Würfelqualität meldet und

eine Meßleitung 58, die am Auslauf des Kühlers 41 durch einen Feuchtmesser 59 gemessene Endfeuchte (Wassergehalt) der Würfel meldet.

Das Pressensteuerungsgerät 47 wirkt auf folgende Geräte ein:

über eine Steuerleitung 61 auf den Motor 17 der Speisevorrichtung 16 zur Steuerung seiner Drehzahl;

über eine Steuerleitung 62 auf die Pumpe 28 zur Steuerung von deren Fördermenge und

über eine Steuerleitung 63 auf das Ventil 27 zur Steuerung von dessen Öffnungsgrad und somit des durch die Dampfdüse 24 in den Konditioneur 21 verlaufenden Durchsatzes des Heizdampfes.

Das Pressensteuerungsgerät 47 sorgt dafür, daß der Durchsatz der Speisevorrichtung 15 und die Fördermenge der Pumpe 28 proportional bleiben, um die Zusammensetzung der Würfel konstant zu halten.

Falls weitere, im Endprodukt verbleibende Komponenten in den Konditioneur 21 eingespeist werden, müssen ihre Zufuhrvorrichtungen ebenfalls nach dieser Proportionalitätsregel gesteuert werden.

Fig. 3 zeigt eine erste Ausführungsform der Meßvorrichtung 45, welche ein Sieb 71, z. B. ein Schwing- oder Trommelsieb, mit einem Einlauf 72 für alle ausgepreßten Würfel, einen Auslauf 73 für die Würfel und einen Auslauf 74 für die durch das Sieb 71 durchgehenden Feinteile aufweist. Am Auslauf 74 fallen die Feinteile bzw. der Abrieb auf eine Bandwaage 75, die als Durchsatzmeßvorrichtung funktioniert. Der Meßwert des Durchsatzes der Bandwaage 75 wird durch die Meßleitung 57 an das Pressensteuerungsgerät 47 übertragen, wo er durch eine Rechenschaltung mit der aus der Meldung durch die Meßleitung 52 abgeleiteten ganzen Durchsatzmenge der Presse verglichen wird. Diese Rechenschaltung ist ihrerseits über die Steuerleitung 61 mit dem Motor 17 der Speisevorrichtung 15 verbunden.

Die Funktion der Würfelpreßanlage nach Fig. 1 mit einer Meßvorrichtung 45 nach Fig. 3 ist wie folgt:

Beim Anfahren veranlaßt das Pressensteuerungsgerät 47 über die Steuerleitung 61 ein progressives Erhöhen der Drehzahl des Motors 17 und somit des Durchsatzes der Speisevorrichtung 16 und über die Steuerleitung 62 ein proportionales Erhöhen des Durchsatzes der Pumpe 28 für die Melasse. Ferner veranlaßt sie über die Steuerleitung 63 ein überproportionales Erhöhen des Durchsatzes des Heizdampfes, um die Temperatur zu erhöhen.

Wenn die Meßleitung 51 meldet, daß die Leistung des Antriebsmotors 12 der Presse 11 ihr zulässiges Maximum erreicht hat, hört das Pressensteuerungsgerät 47 auf, die Geschwindigkeit des Motors 17 und somit den Durchsatz des eingespeisten Produktes zu vergrößern. Damit bleibt auch die Melassezufuhr auf dem erreichten Wert. Diese Koppelung der Durchsätze bleibt - abgesehen von seltenen Ausnahmefällen - bestehen, wird aber der Einfachheit halber in der Folge nicht immer erwähnt.

Über die Steuerleitung 63 wird eine weitere Öffnung des Ventils 27 veranlaßt. Damit vergrößert sich das Verhältnis des Heizdampfes zur Produktmenge im Konditioneur 21, und die am Thermometer 56 gemessene Temperatur steigt. Wegen der somit bewirkten Verbesserung der Preßbarkeit meldet die Meßleitung 51 eine Verminderung der Leistung des Antriebsmotors 12, und das Pressensteuerungsgerät 47 veranlaßt über die Steuerleitung 61 ein weiteres Ansteigen der Drehzahl des Motors 17 und somit des Durchsatzes des Produktes, bis die Meßleitung 51 wiederum das Erreichen der maximal zulässigen Leistung des Antriebsmotors 12 meldet. Dieses Spiel wiederholt sich, solange eine Erhöhung der durch die Meßleitung 55 gemeldeten Temperatur des Produktes eine beträchtliche Verminderung der Antriebsleistung des Motors 12 verursacht. Es wird zuletzt eine Temperatur erreicht, deren Erhöhung bei gleicher Durchsatzmenge des Produktes eine Erhöhung der Leistung das Antriebsmotors 12 verursacht. Dies ist eine kritische Grenze, und das Pressensteuerungsgerät 47 steuert dann das Ventil 27 derart, daß die am Thermometer 26 gemessene und durch die Meßleitung 55 gemeldete Temperatur des Produktes beim Optimum knapp unter der kritischen Grenze bleibt.

Solange die Qualität des gepreßten Produktes befriedigend ist, d. h. solange der Prozentsatz des Meßwertes des durch die Bandwaage 75 und durch die Meßleitung 57 an die Pressensteuerung 47 gemeldeten Durchsatzes der feinen Teile bzw. des Abriebes im Verhältnis zum Wert des aus der über die Meßleitung 52 gemeldeten Drehzahl des Motors 17 abgeleiteten ganzen Durchsatzes der Presse unter dem der gewünschten Qualität entsprechenden Sollwert verbleibt, arbeitet das Pressensteuerungsgerät 47 ungestört, wie das oben beschrieben wurde.

Steigt nun aber der Prozentsatz der feinen Teile über den Sollwert, dann wirkt die Rechenschaltung des Pressensteuerungsgerätes 47 über die Steuerleitung 61 auf den Motor 17 der Speisevorrichtung 16 ein und setzt dessen Drehzahl herab. Gleichzeitig wirkt sie durch die Leitung 62 auf die Förderpumpe 28 und durch die Leitung 63 auf das Ventil 24, um den Durchsatz der Melasse und des Dampfes proportional herabzusetzen. Diese Intervention der Qualitätsregelung geschieht in der Regel erst während der Betriebsphase, die nach der Temperaturoptimierung liegt. Man kann aber auch eine Intervention der Qualitätsregelung schon während der Temperaturoptimierungsphase vornehmen. Dies ist besonders dann zweckmäßig, wenn aufgrund der Abweichung einer Betriebsgröße die Temperaturoptimierung überprüft wird.

Es wird der maximale Durchsatz, der die gewünschte Qualität noch gewährleistet, angesteuert.

Eine wichtige Bedingung innerhalb der Qualität eines Würfels kann der Feuchtegehalt desselben sein. Gewisse Grenzen sollen aus Gründen der Lagerhaltung oder der nach Ländern verschiedenen vorgeschriebenen Maximalwerte nicht überschritten werden. Die beschriebene Anlage kann mit einem Zusatz zur Überwachung der Endfeuchte ausgerüstet werden. Bestimmt wird die Anfangsfeuchte des Produktes, die Feuchte nach der Konditionierung und die Endfeuchte nach dem Kühler, zu deren Bestimmung der Feuchtemesser 59 und die Meßleitung 58 dienen.

Denkbar ist auch eine Regelung derselben durch Festsetzen von Prioritätsparametern, wie:

Feuchte vor Qualität,

Feuchte nach Qualität,

Feuchte zu hoch, Rücknahme Dampf,

Feuchte zu hoch, Rücknahme Melasse.

Die Messung der Endfeuchte kann aber erst nach dem Kühlprozeß stattfinden, so daß in vielen Fällen die Steuerung zu spät erfolgt. Die Ergänzung der Steuerung durch die Meßleitung 58 wird somit auf besondere Fälle beschränkt bleiben, wo über längere Zeit dasselbe Grundprodukt verarbeitet wird.

Bei der zweiten Ausführungsform der Meßvorrichtung 45 nach Fig. 4 strömt der ganze Durchsatz an gepreßten Würfeln durch einen Kanal 81, der mit einer seitlichen Öffnung 82 versehen ist. An dieser Öffnung 82 ist ein Magnet 83 angebracht, vor welchem ein nicht magnetisches Absetzband 84 aus Papier von einer Vorratsspule 85 zu einer Antriebsspule 86 intermittierend geführt wird. Zwischen dem Magnet 83 und der Antriebsspule 86 ist eine optische Auswertevorrichtung 87 für die Bandbelegung angeordnet. Die Auswertevorrichtung 87 ist mit dem Pressensteuerungsgerät 47 durch die Meßleitung 57 verbunden, die die Bandbelegung als Meßwert für den Anteil an Feinteilen meldet. Vor dem Konditioneur 21 wird dem Produkt ein kleiner Durchsatz an feinen eingefärbten Eisenteilen gleichmäßig beigegeben. Die in Feinteilen des gepreßten Produktes enthaltenen Eisenteile werden auf das saugfähige Absetzband 84 angezogen und bei der Auswertevorrichtung 87 ausgewertet.

Der durch die Meßleitung 57 gemeldete Meßwert wird wiederum durch eine Rechenschaltung des Pressensteuerungsgerätes 47 mit dem aus dem Meßwert der Meßleitung 52 für die Drehzahl des Motors 17 abgeleiteten Durchsatz der Presse in Zusammenhang gebracht.

Bei der weiteren Ausführungsform der Meßvorrichtung 45 nach Fig. 5 geht nur eine kleine Menge von Würfeln durch diese hindurch. Die Meßvorrichtung 45 weist eine angetriebene, fest gelagerte Walze 91 und eine dagegen angepreßte beweglich gelagerte Walze 92 auf, welche an einem Hebel 93 gelagert ist, der an einem festen Drehpunkt 94 angelenkt ist. Eine Vorspannfeder 95 preßt die Walze 92 gegen die Walze 91. Die Bewegung des Hebels 93 und infolgedessen diejenige der Walze 92 wird durch einen Wegmesser 96 gemessen. Der Wegmesser 96 ist durch die Meßleitung 57 mit dem Pressensteuerungsgerät 47 verbunden. An der festen Walze 91 ist ein Zufuhrband 97 angebracht, auf welches Würfel 98 durch eine nicht dargestellte Vereinzelungsvorrichtung gegeben werden. Die beim Zerquetschen eines zwischen den Walzen 91, 92 durchgehenden Würfels 98 am Wegmesser 96 gemessenen Bewegungen ergeben einen Wert der Qualität der zur Regelung verwendet wird. Um den Einfluß von normalen Schwankungen der Qualität der Würfel auf die Pressensteuerung auszuschalten, ist es angezeigt, daß diese die Werte einer festen Anzahl Würfel integriert, z. B. die Werte für die jeweils zehn letzten Würfel.

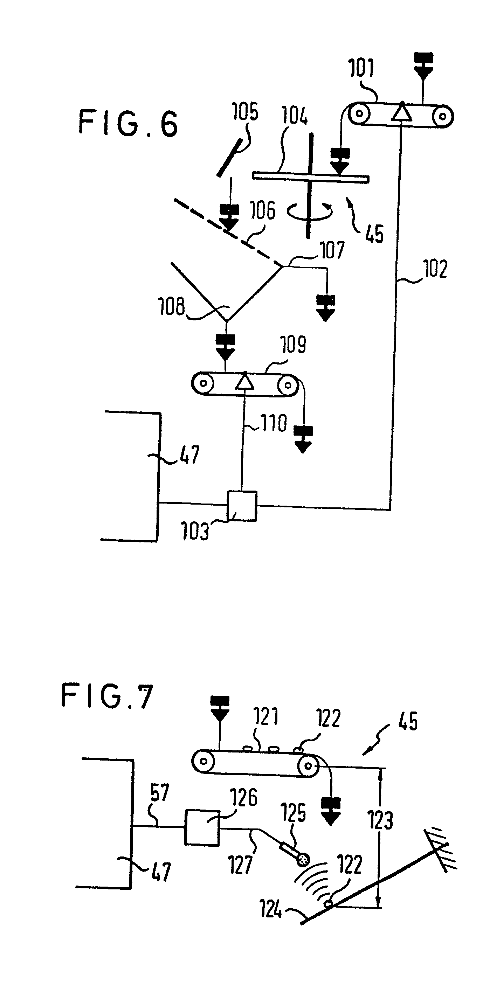

Bei der vierten Ausführungsform nach Fig. 6 geht ebenfalls nur ein kleiner Teil der gepreßten Würfel durch die Meßvorrichtung 45 durch. Zunächst werden die wenigen Würfel auf eine Aufgabebandwaage 101 gegeben, deren Meßwert durch eine Meßleitung 102 einem Prozentrechner 103 gemeldet wird. Von der Aufgabebandwaage 101 fallen die Würfel auf eine Schleuderscheibe 104, die sie gegen eine Prallwand 105 wirft, wo die weniger festen Würfel zerbrechen. Von der Prallwand 105 fällt das Produkt auf ein Sieb 106 mit einem Auslauf 107 für die Würfel und einem Auslauf 108 für die Feinteile. Unter dem Auslauf 108 ist eine Bandwaage 109 angeordnet, die den Durchsatz der feinen Teile mißt. Ihr Meßwert wird durch die Meßleitung 110 dem Prozentrechner 103 gemeldet. Der durch den Prozentrechner 103 gemessene Prozentsatz der Feinteile wird dem Pressensteuerungsgerät 47 durch die Meßleitung 57 gemeldet. Die Funktion des Prozentrechners kann auch durch eine Rechenschaltung der Pressensteuerung übernommen werden.

Bei der weiteren Ausführungsform nach Fig. 7 geht ebenfalls nur eine kleine Menge Würfel durch die Meßvorrichtung 45, welche ein konstant angetriebenes Aufgabeband 121 aufweist, an welches die Würfel 122 durch eine nicht dargestellte Vereinzelungsvorrichtung gegeben werden. Nach einer Fallstrecke 123 fallen die Würfel 122 auf ein einseitig gelagertes Auffangblech 124. Ein Tonaufnehmer 125 nimmt den Klang des Stoßes des Würfels 112 auf das Auffangblech 124 auf und überträgt ihn über eine Meßleitung 127 einem Oszillograph 126. Der Oszillograph 126 meldet die gemessenen Werte (Frequenzen, Intensitäten) als Parameter der Qualität über die Meßleitung 57 an das Pressensteuerungsgerät 47. Statt des Auffangbleches könnte auch ein Trommelfell mit einem Resonanzraum ähnlich einer Marschtrommel verwendet werden.

Eine sechste Ausführungsform der Meßvorrichtung 45 ist in Fig. 2 dargestellt. Die Schneidkraft eines Messers 37 wird durch eine Kraftmeßvorrichtung 131 gemessen, der sie über die Meßleitung 57 an das Pressensteuerungsgerät 47 als Parameter für die Festigkeit der Würfel meldet. Dieser Parameter wird durch das Pressensteuerungsgerät 47 im Verhältnis zum Durchsatz durch die Futterwürfelpresse 11 ausgewertet. Es kann auch zweckmäßig sein, die Kräfte aller Messer 37 aufzunehmen.

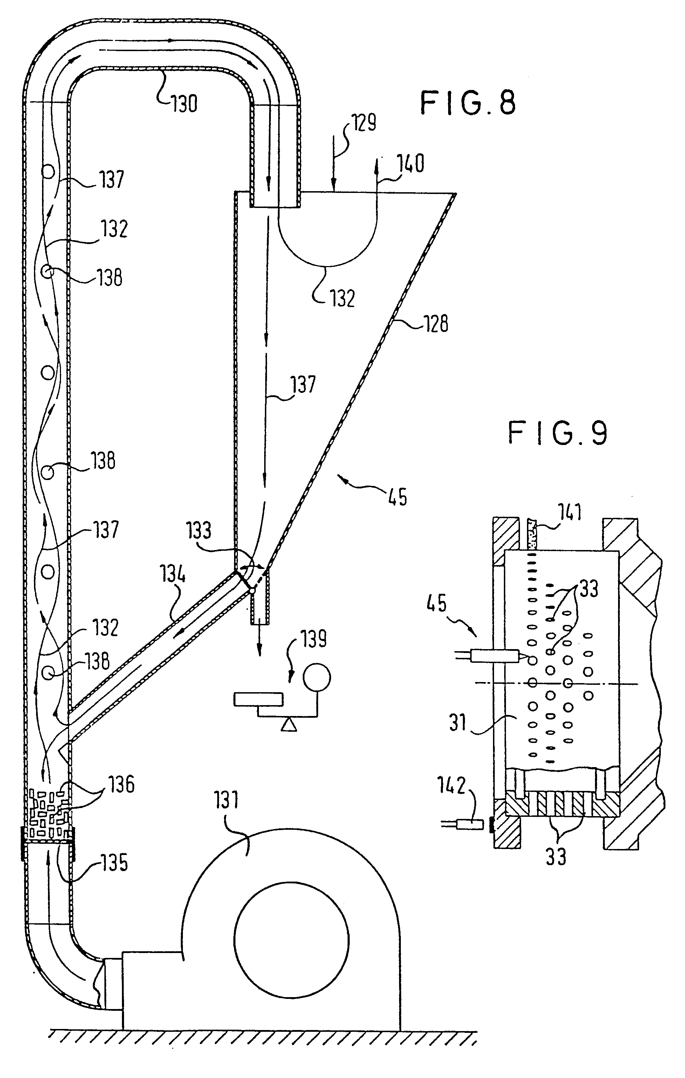

Fig. 8 zeigt eine besonders bevorzugte siebente Ausführungsform der erfindungsgemäßen Meßvorrichtung 45. Danach wird in einen Zugabetrichter 128 in der durch einen Pfeil 129 angedeuteten Weise eine Würfelprobe von z. B. 100 g eingefüllt. In dem Trichter 128 mündet oben seitlich ein Luftumlaufrohr 130, welches an seinem unteren Ende an einen Ventilator 131 mit zwei Geschwindigkeiten angeschlossen ist. Während der Einfüllung der Würfelprobe in den Trichter 128 wird der Ventilator 131 mit der geringeren Geschwindigkeitsstufe betrieben, wodurch ein Kühlluftstrom 132 erzielt wird, der die in den Trichter 128 hineinfallenden Würfel abkühlt.

Am Boden des Trichters 128 ist eine Umschaltklappe 133 vorgesehen, welche beim Einfüllen der Würfel in den Trichter 128 die in der Zeichnung gestrichelt dargestellte Position einnimmt, so daß die Würfel durch ein unten angesetztes Rohrstück 134 in den unteren Teil des Rohres 130 eintreten können, in dem sich ein Sieb 135 befindet. Das Sieb 135 gestattet den Durchtritt der Luft von unten nach oben, verhindert aber ein weiteres Herabfallen der eingetretenen Würfel, welche mit 136 bezeichnet sind.

Nach etwa einminütiger Kühlung wird das Gebläse auf die zweite Geschwindigkeitsstufe umgeschaltet, welche so stark ist, daß nunmehr die Würfel auf einer durch die Linie 137 gekennzeichneten Bahn vom Luftstrom mitgerissen und in einem Abriebkreislauf ständig umhergewirbelt werden. Hierdurch kommt es durch das Aneinanderstoßen der Würfel bzw. durch deren Anstoßen an die Wandungen der Anlage zu einem gewissen Abrieb. Diese Wirkung kann noch durch in das Rohr 130 eingebaute Schikanen 138 gesteigert werden.

Die Schikanen 138 sind erfindungsgemäß in erster Linie in dem vertikalen Teil des Rohres 130 vorgesehen.

Dieser Abriebkreislauf wird ca. 1 Minute aufrechterhalten.

Anschließend wird dann das Gebläse wieder auf die kleine Luftmenge umgeschaltet. Nunmehr bleiben die schwereren noch stückigen Würfel bei 136 auf dem Sieb 135 liegen, während das abgeriebene Mehl noch vom Luftstrom 132 mitgenommen wird. Jetzt wird die Klappe 133 in die in ausgezogenen Linien dargestellte Lage umgeschwenkt, worauf der Luftstrom das abgeriebene Mehl auf eine schematisch bei 139 angedeutete Waage fallen läßt. Dort erfolgt eine automatische Wägung der abgeriebenen Mehlmenge.

Nach dem Wiegen wird das Mehl von der Waage entfernt, und es wird das Gebläse wieder auf die höhere Geschwindigkeitsstufe umgeschaltet, welche auch zur pneumatischen Förderung der Würfel 136 ausreicht. Jetzt werden also die Würfel 136 durch das Rohr 130 und den Trichter 128 auf die Waage 139 pneumatisch gefördert und können ebenfalls gewogen werden.

Die beiden Wiegesignale werden elektrisch gespeichert, ins Verhältnis gesetzt und dann als elektrisches Signal dem Pressensteuerungsgerät 47 zugeführt. Je höher der Abrieb ist, um so schlechter die Qualität der Würfel.

Dieser Zyklus kann etwa alle 2 Minuten wiederholt werden und vollautomatisch durchgeführt werden.

Die bei 140 aus dem Trichter 128 oben austretende Luft kann einem Luftfilter oder Zyklon zur Reinigung zugeführt werden.

Das Ausführungsbeispiel nach Fig. 9 zeigt eine besonders einfach aufgebaute Meßvorrichtung für die erfindungsgemäßen Zwecke.

Mittels einer schematisch bei 45 angedeuteten Lichtschranke, welche etwa an der Stelle angeordnet ist, wo die aus den Preßbohrungen 33 der Preßform 31 hervorstehenden Stränge 141 im wesentlichen horizontal verlaufen, wird ein elektrisches Signal gebildet, welches für die Anzahl der eine bestimmte Länge überschreitenden Stränge repräsentativ ist. Mit anderen Worten erhöhen viele dieses vorbestimmte Maß überschreitende Stränge das elektrische Signal, während nur wenige dieses Maß überschreitende Stränge das Signal erniedrigen. Der Signalverlauf kann aber auch gerade umgekehrt sein. Auf jeden Fall wird so ein elektrisches Signal erhalten, welches ebenfalls für die Qualität der später entstehenden Würfel repräsentativ ist, denn die Qualität der Würfel ist um so besser, je weiter die Stränge von den Preßbohrungen 33 vorstehen, ohne abzubrechen.

Weiter ist an der Preßform ein beispielsweise induktiver Geber 142 angeordnet, welcher die Drehzahl der Preßform 31 mißt.

Da auch die Anzahl der Löcher pro Reihe im Umfang bekannt ist und einem Rechner eingegeben werden kann, kann so ein elektrisches Signal gewonnen werden, das für den Bruchteil der eine bestimmte Länge überschreitenden vorstehenden Stränge repräsentativ ist.

Die Anordnung kann z. B. so eingestellt werden, daß alle Stränge 141 erfaßt werden, die um mehr als 2 mm aus der Preßform 31 hervorstehen.

Das so gewonnene elektrische Signal kann als Qualitätswert wieder in das Pressensteuerungsgerät 47 eingespeist werden.

Wie oben erwähnt wurde, erfolgt die Messung der Feuchtigkeit durch den Feuchtemesser 59 am Ende des Kühlers 41 nach Fig. 1 für eine schnelle Regelung zu spät. Hier kann man erfindungsgemäß Abhilfe dadurch schaffen, daß die Feuchtigkeit bei der Meßvorrichtung 45 unmittelbar nach der Futterwürfelpresse 11 gemessen wird und das Pressensteuerungsgerät 47 auf eine zusätzliche Wasserzufuhrrichtung wirkt, die etwa gleich aufgebaut ist wie die Melassezufuhrrichtung mit der Pumpe 28, dem Zähler 29 und der Düse 25 und parallel dazu geschaltet ist. Eine dritte, ebenfalls entsprechend aufgebaute parallele Zuführleitung kann für die Fettzufuhr vorgesehen sein.

Die Beeinflussung der Produktverweilzeit im Preßloch hängt von der Durchsatzmenge des zu verpressenden Produktes ab.

Die Aufzählung in den Ansprüchen 2 und 3 ist so zu verstehen, daß die einzelnen Parameter jeweils gesondert oder auch in beliebigen Kombinationen und Unterkombinationen für den Regelvorgang benutzt werden können.

Bei dem Ausführungsbeispiel nach Fig. 9 kann das elektrische Signal z. B. so geeicht werden, daß die Qualität in Prozentabrieb oder kg-Härte angegeben wird.

Weiter ist noch darauf hinzuweisen, daß bei der Meßmethode nach Fig. 9 die normalerweise vorhandenen Abstreifmesser vorher abgestellt werden müssen. Grundsätzlich könnte die Messung auch durch Messung der Länge der aus den Preßlöchern vorstehenden Stränge erfolgen, was jedoch wesentlich schwieriger ist.

Besonders vorteilhaft ist es, wenn die Abstreifmesser nur bei einer Umfangslochreihe abgestellt werden und nur dort die Messung stattfindet.

**Patentansprüche**

1. Verfahren zum Steuern einer Futterwürfelpreßanlage, welche eine Futterwürfelpresse (11) mit einer Preßbohrungen (33) aufweisenden Preßform (31) enthält, mit welcher drehbare Preßrollen (32) zum Auspressen des auf die Preßform (31) eingegeben Produktes radial nach außen durch die Preßbohrungen (33) zusammenwirken wobei die ausgepreßten Stränge (141) in Würfel genannte Stücke zerkleinert und die Würfel durch einen Kühler (41) geführt werden, dadurch gekennzeichnet daß einer oder mehrere der folgenden Parameter der Würfelqualität;

der Anteil der Feinteile im verpreßten Produkt, die Festigkeit der Würfel, die Schwingung einer Unterlage, insbesondere eines Bleches (124), auf das die Würfel fallen, die Schneidkraft der Messer (37) für die aus der Preßform (31) austretenden Stränge (141), das Verhältnis von entstandenem Mehl und noch vorhandenen Würfeln nach pneumatischer Umherwirbelung einiger Würfel in einem Abriebkreislauf (Fig. 8), das Verhältnis der über ein bestimmtes Maß über die Oberfläche der Preßform (31) vorstehenden Stränge (141) zu der maximal möglichen Anzahl solcher Stränge (141)

zwischen der Futterwürfelpresse (11) und dem Kühler (41) laufend überwacht und gemessen und zur Steuerung der Futterwürfelpresse (11) verwendet werden, indem die von einem oder mehreren der vorgenannten Parameter bestimmte Würfelqualität bei Unterschreiten eines vorgegebenen Standards automatisch wieder auf den Sollwert gebracht wird.

2. Verfahren nach Anspruch 1 dadurch gekennzeichnet, daß der gemessene Parameter zur Steuerung einer oder mehrerer der folgenden Größen verwendet wird:

des Durchsatzes des zu verpressenden Produktes, der Konditioniertemperatur, der Feuchtigkeit, der Produktverweilzeit in den Preßbohrungen (33) der Preßform (31), des Spaltes zwischen der Preßform (31) und den Preßrollen (32), des Verhältnisses des Anteils der Fettzugabe zum Produkt vor und nach der Futterwürfelpresse (11).

3. Verfahren nach einem der Ansprüche 1 oder 2, dadurch gekennzeichnet, daß die zum Messen herangezogenen Würfel vor dem Messen der Qualität tiefgekühlt werden.

4. Futterwürfelpreßanlage zum Ausüben des Verfahrens nach einem der Ansprüche 1 bis 3 welche eine Futterwürfelpresse (11) mit einer Preßbohrungen (33) aufweisenden Preßform (31) enthält, mit welcher drehbare Preßrollen (32) zum Auspressen des auf die Preßform (31) eingegebenen Produktes radial nach außen durch die Preßbohrungen (33) zusammenwirken, wobei die ausgepreßte Strange (141) in Würfel genannte Stücke zerkleinert und die Würfel durch einen Kühler (41) geführt werden, dadurch gekennzeichnet, daß gleich nach dem Auslauf der Futterwürfelpresse (11) vor dem Kühler eine Meßvorrichtung (45) für die Würfelqualität vorhanden ist und daß die Meßvorrichtung (45) an ein Pressensteuerungsgerät (47) angeschlossen ist.

5. Futterwürfelpreßanlage nach Anspruch 4, dadurch gekennzeichnet, daß die Meßvorrichtung (45) über das Pressensteuerungsgerät (47) mit dem Antrieb (17) der Speisevorrichtung (16) der Presse (11) zur Beeinflussung dieses Antriebes (17) verbunden ist.

6. Futterwürfelpreßanlage nach Anspruch 4 oder 5, dadurch gekennzeichnet, daß die Meßvorrichtung (45) ein Sieb (71) mit einem Einlauf (72) das gepreßte Produkt, einem Auslauf (73) für die Würfel und einem Auslauf (74) für die durch das Sieb (71) durchgehenden Feinteile aufweist und daß am Auslauf (74) für die Feinteile eine Durchsatzvorrichtung (75) angeordnet ist, die an das Pressensteuerungsgerät (47) angeschlossen ist, wobei vorzugsweise beim Zuführen des gesamten gepreßten Produktes zum Sieb das Pressensteuerungsgerät (47) eine Rechenschaltung aufweist für den Prozentsatz des Meßwertes der Durchsatzmeßvorrichtung im Verhältnis zum Meßwert des an der Speisevorrichtung (15, 16, 17) der Futterwürfelpresse (11) gemessenen ganzen Durchsatzes der Presse (11), wobei diese Rechenschaltung auf den Antrieb der Speisevorrichtung wirkt.

7. Futterwürfelpreßanlage nach Anspruch 4 oder 5, dadurch gekennzeichnet, daß die Meßvorrichtung (45) einen Magneten (83) aufweist, vor welchem ein nichtmagnetisches Absetzband (84) an einer Öffnung (82) des Kanals (81) für das gepreßte Produkt und an eine optische Auswertevorrichtung (87) für die Bandbelegung geführt ist, wobei der Antrieb des Absetzbandes (84) intermittierend erfolgen kann und wobei die Auswertevorrichtung (87) mit der Pressensteuerung (47) verbunden ist.

8. Futterwürfelpreßanlage nach Anspruch 4 oder 5, dadurch gekennzeichnet, daß die Meßvorrichtung (45) eine fest gelagerte Walze (91) und eine gegen diese durch die Kraft einer Feder (95) angepreßte beweglich gelagerte Walze (92) aufweist, wobei ein Wegmesser (96) für den Weg der beweglich gelagerten Walze (92) weg von der fest gelagerten Walze (91) beim Vermahlen eines Würfels (98) vorgesehen und der Wegmesser (96) mit dem Pressensteuerungsgerät (47) verbunden ist.

9. Futterwürfelpreßanlage nach Anspruch 4 oder 5, dadurch gekennzeichnet, daß die Meßvorrichtung (45) eine Schleuderscheibe (104) und eine Prallwand (105) sowie eine Durchsatzmeßvorrichtung (101) für den Teilfluß des verpreßten Produktes aufweist, der auf die Schleuderscheibe (104) aufgegeben wird, daß ein nach der Prallwand (105) angeordnetes Sieb (106) mit einem Auslauf (107) für die Würfel und einem Auslauf (108) für die durch das Sieb (106) durchgehenden feinen Teile versehen ist, wobei am Auslauf (108) für die feinen Teile eine Durchsatzmeßvorrichtung (109) angeordnet ist, und daß die beiden Durchsatzmeßvorrichtungen (101, 109) an einer Rechenschaltung des Pressensteuerungsgerätes (47) für den Prozentsatz der feinen Teile verbunden sind, wobei diese Rechenschaltung auf den Antrieb (17) der Speisevorrichtung (16) der Futterwürfelpresse (11) wirkt.

10. Futterwürfelpreßanlage nach Anspruch 4 oder 5, dadurch gekennzeichnet, daß eine Fallstrecke (123) für vereinzelte Würfel (122) vorhanden ist, an deren Ende sich ein Auffangblech (124) befindet, dessen Schwingungen gemessen und an das Pressensteuerungsgerät (47) gegeben werden.

11. Futterwürfelpreßanlage nach Anspruch 4 oder 5, dadurch gekennzeichnet, daß ein Messer (37) zum Abschneiden der aus den Preßbohrungen (33) der Preßform (31) austretenden Stränge mit einer Kraftmeßvorrichtung (131) versehen ist, die mit dem Pressensteuerungsgerät (47) verbunden ist.

12. Futterwürfelpreßanlage nach Anspruch 4 oder 5, dadurch gekennzeichnet, daß die Meßvorrichtung (45) an einer Stelle der Preßform (31), wo die Stränge (141) im wesentlichen horizontal austreten, bei abgestellten Messern die Anzahl der über ein bestimmtes Maß (z. B. 2 mm) noch vorstehenden, nicht abgebrochenen Stränge (141) mißt und mit der maximal möglichen Anzahl solcher Stränge (141) vergleicht und das Ergebnis dieses Vergleiches als elektrisches Signal an das Pressensteuerungsgerät (47) abgibt.

13. Futterwürfelpreßanlage nach Anspruch 4 oder 5, dadurch gekennzeichnet, daß die Meßvorrichtung (45) in kurzen Zeitabständen von z. B. 2 min einen kleinen Anteil ausgepreßter Würfel aufnimmt, kühlt und in einem pneumatischen Abriebkreislauf (Fig. 8) umherwirbelt und daß nach einigen Umläufen das Verhältnis von entstandenem Mehl und noch vorhandenen Würfeln gemessen und als elektrisches Signal dem Pressensteuerungsgerät (47) zugeführt wird.

14. Futterwürfelpreßanlage nach Anspruch 13, gekennzeichnet durch Mittel zur pneumatischen Trennung des entstandenen Mehls von noch vorhandenen Würfeln.

15. Futterwürfelpreßanlage nach Anspruch 13, dadurch gekennzeichnet, daß die Mittel zur pneumatischen Trennung des entstandenen Mehls von noch vorhandenen Würfeln aus einem zwei Geschwindigkeitsstufen aufweisenden, zur pneumatischen Förderung der Würfel im Abriebskreislauf vorgesehenen Ventilators (131) und einer im Abriebskreislauf vorgesehenen umschaltbaren Klappe (131) besteht.

16. Futterwürfelpreßanlage nach Anspruch 15, dadurch gekennzeichnet, daß die Klappe (131) eine erste Stellung, in der sie einen Auslaß für im Abriebskreislauf pneumatisch geförderte Würfel bzw. entstandenes Mehl sperrt und eine zweite Stellung, in der sie den Abriebskreislauf sperrt und den Auslaß freigibt, aufweist.

17. Futterwürfelpreßanlage nach einem der Ansprüche 13 bis 16, gekennzeichnet durch einen die Würfel (136) bzw. das entstandene Mehl vom Ventilator (131) fernhaltenden, im Abriebskreislauf vorgesehenen Sieb (135).

## Claims

1. A method of controlling a feed pelleting press installation which contains a feed pelleting press (11) having a press die (31) with press bores (33), wherein rotatable press rollers (32) cooperate with the press die to press the product supplied to the press die (31) radially outwardly through the press bores (33), wherein the extruded strands (141) are comminuted into pieces called pellets, and wherein the pellets are fed through a cooler (41), characterised in that one or more of the following parameters:

the proportion of fines in the pressed product, the strength of the pellets, the oscillation of a substrate, in particular a sheet metal plate (124) on which the pellets fall, the cutting force of the knife (37) for the strands emerging from the press die (31), the ratio of the flour that is created and pellets that are still present after pneumatic swirling of a few pellets in an abrasion circuit (Fig. 8),
the ratio of strands (141) projecting by a certain amount beyond the surface of the press die (31) to the maximum possible number of such strands (141),
is continuously monitored and measured between the feed pelleting press (11) and the cooler (41) and is used to control the feed pelleting press (11) and in that the pellet quality determined from one or more of the above named parameters is automatically brought back to the desired value on falling short of a predetermined quality standard.

2. A method in accordance with claim 1, characterised in that the measured parameter is used to control one or more of the following quantities:

the throughput of the product to be pressed, the conditioning temperature, the moisture, the product dwell time in the press bores (33) of the press die (31), the gap between the press die (31) and the press rollers (32), the ratio of the proportion of fat that is added to the product before and after the feed pelleting press (11).

3. A method in accordance with claim 1 or claim 2, characterised in that the pellets selected for measurement are chilled prior to measurement of the quality.

4. A feed pelleting press installation for carrying out the method of one of the claims 1 to 3, the feed pelleting press installation containing a feed pelleting press (11) having a press die (31) with press bores (33), wherein rotatable press rollers (32) cooperate with the press die to press the product supplied to the press die (31) radially outwardly through the press bores (33), wherein the extruded strands (141) are comminuted into pieces called pellets, and wherein the pellets are fed through a cooler (41), characterised in that a measuring device (45) for the quality of the pellets is present right after the outlet of the feed pelleting press (11) before the cooler, and in that the measuring device (45) is connected to a press control apparatus (47).

5. A feed pelleting press installation in accordance with claim 4 and characterised in that the measuring device (45) is connected via the press control device (47) with the drive (17) of the feed device (16) for the press (11) in order to influence this drive (17).

6. A feed pelleting press installation in accordance with claim 4 or claim 5, and characterised in that the measuring device (45) has a sieve (71) with an inlet (72) for the pressed product, an outlet (73) for the pellets and an outlet (74) for the fines which pass through the sieve (71); and in that a throughput measuring device (75) is arranged at the outlet (74) for the fines, with the throughput measuring device being connected to the press control device (47), wherein, with the entire pressed product being preferably supplied to the sieve, the press control device (47) has a computing circuit for computing the percentage of the value measured by the throughput measuring device relative to the value for the entire throughput of the press measured at the feed device (15, 16, 17) for the feed pelleting press (11), with this computing circuit acting on the drive for the feed device.

7. A feed pelleting press installation in accordance with claim 4 or claim 5 and characterised in that the measuring device (45) has a magnet (83), and in that a nonmagnetic deposit band (84) is guided in front of the magnet (83) at an opening (82) of the duct (81) for the pressed product and past an optical evaluation device (87) for determining the extent to which the band is covered, wherein the drive of the deposit band (84) can take place intermittently and wherein the evaluation device (87) is connected with the press control (47).

8. A feed pelleting press installation in accordance with claim 4 or claim 5 and characterised in that the measuring device (45) has a fixedly journalled roller (91) and a movably journalled roller (92) which is pressed against the fixedly journalled roller by the force of a spring (95), wherein there is provided a distance transducer (96) for the path of the movably journalled roller (92) away from the fixedly journalled roller (91) during grinding of a pellet (98), and wherein the distance transducer (96) is connected to the press control apparatus (47).

9. A feed pelleting press installation in accordance with claim 4 or claim 5 and characterised in that the measuring device (45) has a slinger disk (104), an impact wall (105) and also a throughput measuring device (101) for the flow of the part of the pressed product which is deposited on the slinger disk (104); in that a sieve (106) arranged after the impact wall (105) is provided with an outlet (107) for the pellets and an outlet (108) for the fines which pass through the sieve (106), there being a throughput measuring device (109) arranged at the outlet (108) for the fines, and in that the two throughput measuring devices (101, 109) are connected to a computing circuit of the press control apparatus (47) for computing the percentage of the fines, wherein this computing circuit operates on the drive (17) for the feed device (16) of the feed pelleting press (11).

10. A feed pelleting press in accordance with claim 4 or claim 5 and characterised in that a drop path (123) is present for segregated pellets (122), there being a sheet metal interception plate (124) located at the end of the drop path, with the oscillations of the sheet metal interception plate being measured and being passed to the press control apparatus (47).

11. A feed pelleting installation in accordance with claim 4 or claim 5 and characterised in that a knife (37) for cutting off the strands emerging from the press bores (33) of the press die (31) is provided with a force measuring device (131) which is connected to the press control device (47).

12. A feed pelleting press installation in accordance with claim 4 or claim 5 and characterised in that the measuring device (45) measures, at a position of the press die (31) where the strands (141) emerge substantially horizontally and with the knives inoperative, the number of strands (141) which have not been broken off and which project beyond a predetermined amount (for example 2 mm), compares this number with the maximum possible number of such strands (141) and passes the result of this comparison as an electrical signal to the press control apparatus (47).

13. A feed pelleting press installation in accordance with claim 4 or claim 5 and characterised in that the measuring device (45) receives a small proportion of extruded pellets at short intervals of time, of for example 2 minutes, cools them and swirls them around in a pneumatic abrasion circuit (Fig. 8), and in that the ratio of flour that is created to the pellets which still exist is measured after several circuits and is passed as an electrical signal to the press control apparatus (47).

14. A feed pelleting press installation in accordance with claim 13 and characterised by means for pneumatically separating the flour that is created from the pellets that are still present.

15. A feed pelleting press installation in accordance with claim 13 characterised in that the means for pneumatically separating the flour that is created from the pellets which still exist consists of a fan (131) provided in the abrasion circuit for pneumatically conveying the pellets and having two speeds of operation, and a flap (131) which can be switched over and which is provided in the abrasion circuit.

16. A feed pelleting press in accordance with claim 15 and characterised in that the flap (131) has a first position in which it blocks an outlet for pneumatically conveyed pellets or flour created in the abrasion circuit and a second position in which it blocks the abrasion circuit and frees the outlet.

17. A feed pelleting press installation in accordance with one of the claims 13 to 16, characterised by a sieve (135) provided in the abrasion circuit for keeping the pellets (136) and/or the flour that is created away from the fan (131).

**Revendications**

1. Procédé pour commander une installation de compactage de dés de fourrage qui comprend un moule de pressage (31) présentant une presse pour dés de fourrage (11) ayant des perforations de pressage (33), et avec lequel coopèrent des rouleaux rotatifs de pressage (32) pour expulser le produit introduit sur le moule de pressage (31) radialement vers l'extérieur à travers les perforations de pressage (33), les tronçons expulsés (141) étant alors réduits en morceaux appelés dés lesquels sont conduits à travers un appareil de refroidissement (41), procédé caractérisé en ce qu'un ou plusieurs des paramètres suivants de la qualité des dés:

- la proportion des particules fines dans le produit compacté;

- la rigidité des dés;

- l'oscillation d'une base, en particulier une tôle (124), sur laquelle tombent les dés;

- la force de sectionnement des couteaux (37) destinés aux tronçons (141) sortant du moule de pressage (31);

- le rapport de la mouture produite et des dés encore présents après tourbillonnement pneumatique de quelques dés dans un circuit d'abrasion (figure 8);

- le rapport entre les tronçons (141) dépassant d'une cote déterminée de la surface du moule de pressage (31) et le plus grand nombre possible de tels tronçons (141),

sont surveillés en continu entre la presse pour dés de fourrage (11) et l'appareil de refroidissement (41) et sont mesurés et sont utilisés pour commander la presse pour dés de fourrage (11), en amenant à nouveau automatiquement à la valeur nominale la qualité des dés déterminée par un ou plusieurs des paramètres ci-dessus lorsqu'elle est en dessous d'une norme prédéterminée.

2. Procédé selon la revendication 1, caractérisé en ce que le paramètre mesuré est utilisé pour commander une ou plusieurs des grandeurs suivantes

- le débit du produit à compacter

- la température de conditionnement;

- l'humidité;

- le temps de séjour du produit dans les perforations de pressage (33) du moule de pressage (31);

- l'intervalle entre le moule de pressage (31) et les rouleaux de pressage (32);

- le rapport entre les proportions d'adjonction de graisse au produit avant et après la presse pour dés de fourrage (11).

3. Procédé selon l'une des revendications 1 ou 2, caractérisé en ce que les dés utilisés pour la mesure sont refroidis fortement avant mesure de la qualité.

4. Installation de compactage de dés de fourrage pour mettre en oeuvre le procédé selon l'une des revendications 1 à 3, qui contient une presse pour dés de fourrage (11) ayant un boule de pressage (3l) présentant des perforations de pressage (33) et avec lequel coopèrent des rouleaux de pressage (32) rotatifs pour expulser le produit fourni au moule de pressage (31) radialement vers l'extérieur à travers les perforations de pressage (33), les tronçons expulsés (141) étant alors réduits en morceaux appelés dés, lesquels sont conduits à travers un appareil de refroidissement (41), caractérisée en ce que, aussitôt après la sortie de la presse pour dés de fourrage (11), on prévoit avant l'appareil de refroidissement un dispositif de mesure (45) de la qualité des dés, et en ce que le dispositif de mesure (45) est raccordé à un appareil (47) de commande de la presse.

5. Installation de compactage pour dés de fourrage selon la revendication 4, caractérisée en ce que le dispositif de mesure (45) est relié par l'intermédiaire de l'appareil (47) de commande de presse à la commande (17) du dispositif d'alimentation (16) de la presse (11) de manière à influencer cette commande (17).

6. Installation de compactage de dés de fourrage selon la revendication 4 ou 5, caractérisée en ce que le dispositif de mesure (45) présente un crible (71) avec une entrée (72) pour le produit compacté, une sortie (73) pour les dés et une sortie (74) pour les particules fines traversant le crible (71) et en ce que, à la sortie (74) destinée aux particules fines, on dispose un dispositif de mesure de débit (75) raccordé à l'appareil (47) de commande de la presse, ce dernier présentant de préférence à l'arrivée de tout le produit compacté au crible un circuit de calcul pour calculer le pourcentage de la valeur de mesure du dispositif de mesure de débit par rapport à la valeur de mesure de tout le débit de la presse (11) mesurée sur le dispositif d'alimentation (15, 16, 17) de la presse de dés de fourrage (11), ce circuit de calcul agissant alors sur la commande du dispositif d'alimentation.

7. Installation de compactage de dés de fourrage selon la revendication 4 ou 5, caractérisée en ce que le dispositif de mesure (45) présente un aimant (83) devant lequel une bande (84) non magnétique de décantation, à un orifice (82) du canal (81) destiné au produit compacté, est conduite à un dispositif optique (87) d'évaluation du dépôt sur la bande, la commande de la bande (84) pouvant alors avoir lieu de façon intermittente et le dispositif d'évaluation (87) étant relié à la commande de presse (47).

8. Installation de compactage de dés de fourrage selon la revendication 4 ou 5, caractérisée en ce que le dispositif de mesure (45) présente un cylindre (91) monté rigidement et un cylindre (92) monté de façon mobile et poussé contre le cylindre (91) par la force d'un ressort (95), un appareil (96) étant prévu pour la mesure du trajet du cylindre (92) monté de façon mobile par rapport au cylindre (91) monté de façon rigide lors du broyage d'un dé (98), l'appareil de mesure de trajet (96) étant relié à l'appareil de commande de presse (47).

9. Installation de compactage de dés de fourrage selon la revendication 4 ou 5, caractérisée en ce que le dispositif de mesure (45) comporte un disque de centrifugation (104) et une paroi de rebondissement (105) ainsi qu'un dispositif de mesure de débit (101) pour mesurer le débit partiel du produit compacté qui est fourni au disque de centrifugation (104), en ce qu'un crible (106) disposé après la paroi de rebondissement (105) est muni d'une sortie (107) pour les dés et d'une sortie (108) pour les particules fines traversant le crible (106), un dispositif de mesure de débit (109) étant disposé à la sortie (108) des particules fines, et en ce que les deux dispositifs de mesure (101, 109) sont reliés à un dispositif de calcul de l'appareil de commande de presse (47) pour calculer le pourcentage des particules fines, ce circuit de calcul agissant sur la commande (17) du dispositif d'alimentation (16) de la presse pour dés de fourrage (11).

10. Installation de compactage de dés de fourrage selon la revendication 4 ou 5, caractérisée en ce qu'on dispose pour les dés séparés (122) d'un trajet de chute (123) à l'extrémité duquel se trouve une tôle de réception (124) dont les oscillations sont mesurées et fournies à l'appareil de commande de presse (47).

11. Installation de compactage de dés de fourrage selon la revendication 4 ou 5, caractérisée en ce qu'un couteau (37) pour le découpage des tronçons sortant des perforations de pressage (33) du moule de pressage (31) est muni d'un dispositif de mesure de force (131) qui est relié à l'appareil de commande de presse (47).

12. Installation de compactage de dés de fourrage selon la revendication 4 ou 5, caractérisée en ce que le dispositif de mesure (45) mesure le nombre des tronçons (141) non rompus existant encore au-delà d'une dimension déterminée (par exemple 2 mm) à un emplacement du moule de pressage (31) où les tronçons (141) sortent sensiblement horizontalement, les couteaux étant arrêtés, et compare avec le nombre maximal possible de tels tronçons (141), le dispositif (45) fournissant le résultat de cette comparaison sous forme de signal électrique à l'appareil de commande de presse (47).

13. Installation de compactage de dés de fourrage selon la revendication 4 ou 5, caractérisée en ce que le dispositif de mesure (45), à des intervalles de temps rapprochés de, par exemple, 2 minutes, reçoit, refroidit et fait tourbillonner dans un dispositif d'abrasion pneumatique (figure 8) une faible proportion de dés compactés et en ce que, après quelques circuits, le rapport de la mouture produite et des dés encore présents est mesuré et est fourni comme signal électrique à l'appareil de commande de presse (47).

14. Installation de compactage de dés de fourrage selon la revendication 13, caractérisée par des moyens pour effectuer la séparation pneumatique de la mouture produite par rapport aux dés encore présents.

15. Installation de compactage de dés de fourrage selon la revendication 13, caractérisée en ce que les moyens destinés à séparer pneumatiquement la mouture produite des dés encore présents sont constitués par un ventilateur (131) présentant deux étages de vitesses et prévu dans le circuit d'abrasion pour le transport pneumatique des dés, et par un volet (131) commutable prévu dans le circuit d'abrasion.

16. Installation de compactage de dés de fourrage selon la revendication 15, caractérisée en ce que le volet (131) présente une première position dans laquelle il bloque une sortie pour les dés transportés pneumatiquement dans le circuit d'abrasion ou la mouture produite, et une deuxième position dans laquelle il bloque le circuit d'abrasion et libère la sortie.

17. Installation de compactage de dés de fourrage selon l'une des revendications 13 a 16, caractérisée par un crible (135) prévu dans le circuit d'abrasion et qui est destiné a maintenir a l'écart du ventilateur (131) les dés (136) ou la mouture produite.

# FIG.1

FIG.2

FIG.3

FIG.4

FIG. 5

## FIG. 6

## FIG. 7

EP 0 040 406 B2

FIG.8

FIG.9

7